Europäisches Patentamt

European Patent Office

Office européen des brevets

(11) Publication number: **0 493 063 B1**

## EUROPEAN PATENT SPECIFICATION

(45) Date of publication of patent specification: **22.02.95**  (51) Int. Cl.6: **B60C 11/04**, B60C 11/11

(21) Application number: **91311934.3**

(22) Date of filing: **23.12.91**

(54) **Pneumatic radial tyre.**

(30) Priority: **28.12.90 JP 415943/90**

(43) Date of publication of application:
**01.07.92 Bulletin 92/27**

(45) Publication of the grant of the patent:
**22.02.95 Bulletin 95/08**

(84) Designated Contracting States:
**DE FR GB IT**

(56) References cited:
**EP-A- 0 299 766
GB-A- 2 093 777
US-A- 4 676 290**

**PATENT ABSTRACTS OF JAPAN vol. 10, no. 6 (M-445)(2063) 11 January 1986 & JP-A-60 169 305 (OOTSU TIRE K.K.) 2 September 1985**

(73) Proprietor: **SUMITOMO RUBBER INDUSTRIES LIMITED
1-1 Tsutsuicho 1-chome
Chuo-ku
Kobe-shi
Hyogo-ken (JP)**

(72) Inventor: **Hasegawa, Hirotsugu
409-9 Minori,**
Kakogawa-cho
Kakogawa-shi,
Hyogo-ken (JP)
Inventor: **Minami, Nobuaki
26-16-201 Mikage-tsukamichi 2-chome**
Higashinada-ku,
Kobe-shi,
Hyogo-ken (JP)
Inventor: **Kuroda, Yutaka
2-526-402 Manabigaoka 5-chome
Tarumi-ku,
Kobe-shi,
Hyogo-ken (JP)**

(74) Representative: **Stewart, Charles Geoffrey
SP TYRES UK LIMITED
Technical Division
Fort Dunlop,
Erdington,
Birmingham B24 9OT (GB)**

## Description

The present invention relates to a pneumatic radial tyre especially suitable for passenger cars in which the wet grip performance is improved without deteriorating low noise characteristics.

In general, a tyre is provided with tread grooves for drainage to thereby improve wet grip performance. Such a water-draining function is very important under high speed running and recent high-performance cars require further improvements in wet grip performance.

However, tread grooves make noise and means of improving the wet grip performance generally increase the noise level.

To solve those contradictory problems, in Japanese patent Application JP-A-02-14905, a block pattern is disclosed, in which the tread is provided in the ground contacting area with straight grooves inclined at an acute angle of 15 to 40 degrees with respect to the circumferential direction of the tyre. However, due to the small inclination angle, the resultant tread rigidity is low, steering stability is not good and wet grip is still low.

A tyre having a tread according to the preamble of claim 1 is known, for example from Japanese patent application JP-A-60-169305.

It is, therefore, an object of the present invention to provide a pneumatic radial tyre, in which wet grip performance and low noise performance are improved at the same time without deteriorating steering stability.

According to one aspect of the present invention, a pneumatic radial tyre has a rib-block type tread pattern and comprises a tread provided with four main grooves extending continuously in the circumferential direction of the tyre arranged symmetrically with respect to the tyre equator so as to divide the tread into five ribs, the four main grooves consisting of a pair of axially inner main grooves (G2) disposed one on each side of the tyre equator and a pair of axially outermost main grooves (G1) disposed one between each tread edge and each inner main groove, each shoulder rib (RS) between the outermost main groove and the tread edge being provided with shoulder lateral grooves (g1L, g1R) extending from the outermost main grooves to the tread edge so as to divide the shoulder rib into blocks, each middle rib (RM) between the inner main groove (G2) and the outermost main groove (G1) being provided with middle lateral grooves ( g2L, g2R ) extending from the inner main groove (G2) to the outermost main groove (G1) so as to divide the middle rib (RM) into blocks, the central rib (RC) between the two inner main grooves (G2) being provided with central lateral grooves (g3L, g3R) extending from the inner main grooves (G1) towards the tyre equator and terminated within the central rib (RC) and near the tyre equator so as to provide continuity in the circumferential direction of the tyre, wherein in the condition where the tyre is mounted on its regular rim and inflated to its regular inner pressure and loaded with its regular type load, the quotient (WG/W) of the total (WG) of the axial widths (WG1, WG2) of the four main grooves (G1 and G2) divided by the ground contact width (W) measured between the axial edges (SE) of the ground contacting area (S) is in the range of 0.25 to 0.32 and on each side of the tyre equator, the ground contact width (W) and the total (LG1 + LG2) of the axial length (LG1) measured from the ground contacting area edge (SE) to the axially inner edge of the shoulder rib (RS) and the axial length (LG2) measured from the ground contacting area edge (SE) to the axially inner edge of the middle rib (RM) satisfying the relation:

$$0.44 =< (LG1 + LG2)/W =< 0.50.$$

Preferably, the four main grooves are straight, and each set of lateral grooves (g1L, g1R, g2L, g2R, g3L, g3R) are arranged or spaced apart at regular pitches P in the circumferential direction of the tyre, and further all the lateral grooves on each side of the tyre equator are inclined in the same direction but in the opposite direction to the lateral grooves on the other side of the tyre equator.

An embodiment of the present invention will now be described in detail in conjunction with the accompanying drawings, in which:

Fig.1 is a developed plan view of a passenger car tyre according to the present invention;

Fig.2 is a cross sectional view thereof;

Fig.3 is an enlarged cross sectional view of the central rib thereof; and

Figs.4 and 5 are graphs showing test results.

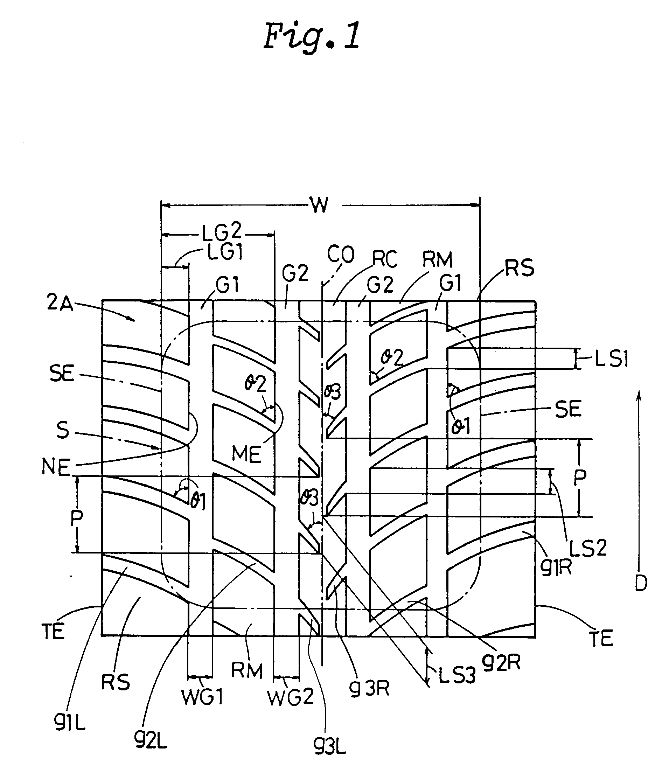

In Figs.1-3, is shown a normally inflated tyre 1 mounted on its regular rim J and inflated to its regular inner pressure.

The tyre 1 has a tread portion 2 having a tread surface 2A, a pair of axially spaced bead portions 4, and a pair of sidewalls 3 extending between the tread edges and the bead portions.

A bead core 5 disposed is in each bead portion 4, a carcass 6 extends between the bead portions 4 and is turned up around the bead cores 5 from the axially inside to the outside thereof, and a belt 7 is disposed radially outside the carcass 6 and inside the tread portion 2.

The carcass 6 comprises one or more plies, in this embodiment two plies, of cords arranged substantially radially at an angle of 70 to 90 degrees with respect to the tyre equator CO so as to provide a radial or semi-radial cord arrangement.

For the carcass cords, organic fibre cords, e.g. nylon, polyester, aromatic polyamide or the like can be used.

The belt 7 in this embodiment comprises two crossed plies 7A and 7B, the first ply 7A being disposed on the the carcass 6 and the second ply 7B being disposed on the first ply 7A.

Each belt ply is composed of rubberised parallel cords laid obliquely with respect to the tyre equator CO so as to cross the cords in the adjacent ply.

For the first and second belt plies 7A and 7B, organic fibre cords, e.g. nylon, polyester, aromatic polyamide or the like, or steel cords are used.

The tread portion 2 is provided with a rib-block pattern comprising a central rib RC and two pairs of rows blocks formed by four main grooves (G1,G2) extending continuously in the circumferential direction of the tyre and lateral grooves (g1L,g2L,g3L,g1R,g2R,g3R) having two axial ends opened at the main groove or the tread edge.

The main grooves G2,G2 are a pair of inner main grooves G2 disposed one on each side of the tyre equator CO and a pair of outermost main grooves G1 disposed one between each inner main groove G2 and each tread edge TE.

The grooves G2 and G2 and the grooves G1 and G1 are arranged symmetrically with respect to the tyre equator CO.

Accordingly, by the four main grooves G, the tread portion 2 is axially divided into five circumferential parts, that is, one central rib RC between the inner main grooves G2 and G2, two middle ribs RM between the inner main grooves G2 and the outermost main grooves G1, and two shoulder ribs RS between the outermost main grooves G2 and the tread edges TE.

Each of the shoulder ribs RS is provided with lateral grooves (g1L, g1R). Each of the lateral grooves g1L and g1R runs completely across the shoulder rib RS from the axially outermost main groove G1 to the tread edge TE so as to subdivide the rib into a circumferential row of blocks.

Each of the middle ribs RM is provided with lateral grooves (g2L, g2R). Each of the lateral grooves g2L and g2R runs completely across the middle rib RM from the axially inner main groove G2 to the axially outermost main groove G1 so as to subdivide the rib into a circumferential row of blocks.

The central rib RC is also provided with lateral grooves (g3L and g3R), but it is not subdivided into blocks. Continuity of the central rib RC in the circumferential direction of the tyre is maintained.

The lateral grooves g3L and g3R extend from the inner main grooves G2 towards the tyre equator CO, and each of them terminates within the central rib RC at a position near to but before the tyre equator CO.

In this embodiment, the main grooves G are straight grooves running parallel to the tyre equator CO.

The axial widths WG1 and WG2 of the main grooves G1 and G2, respectively are chosen such that the quotient WG/W of the total width WG of the four main grooves G1 and G2 divided by the ground contact width W is not less than 0.25 and not more than 0.32, where the ground contact width W is an axial distance measured between the axial edges SE of the ground contacting area S in the normally loaded state of the tyre 1 mounted on its regular rim J, inflated to its regular inner pressure and loaded with its regular load.

In this embodiment, the width WG2 is larger than the width WG1. Therefore, the total width WG = 2(WG1 + WG2). When WG1 = WG2, WG = WG1X4 = WG2X4. When WG1 > WG2, WG = 2(WG1 + WG2).

If WG/W is less than 0.25, drainage becomes insufficient to maintain the wet grip performance.

If WG/W is more than 0.32, it becomes impossible to adequately suppress tyre noise.

In the half tread portion on each side of the tyre equator CO, the length LG2 measured axially inwardly from the above-mentioned ground contacting area edge SE to the axially inner edge ME of the middle circumferential part or rib RM, and the length LG1 measured axially inwardly from the ground contacting area edge SE to the axially inner edge NE of the axially outermost circumferential part or shoulder rib RS satisfy the following equation 1:

$$0.88 =< 2(LG1 + LG2)/W =< 1.00 \qquad Eq.1$$

where
W is the ground contact width.

If $2(LG1 + LG2)/W$ is less than 0.88, the wet grip performance is deteriorated. If $2(LG1 + LG2)/W$ is more than 1.00, the low noise performance and rain groove performance are impaired. Here, the rain groove performance is the resistance to disturbance of steering stability caused by the grooves commonly provided on the road surface for wet grip.

Further, the difference (LG2-LG1) of the length LG2 from the length LG1 is preferably set to satisfy the following equation 2:

$$0.42 =< 2(LG2\text{-}LG1)/W =< 0.54 \qquad Eq.2$$

where
W is the ground contact width.

If $2(LG2\text{-}LG1)/W < 0.42$, steering stability is lost.

If 2(LG2-LG1)/W > 0.54, the wet grip performance is liable to be deteriorated.

The lateral grooves g1L, g2L and g3L on one side (the left side) of the tyre equator CO are inclined in the same direction, and the lateral grooves g1R, g2R and g3R on the other side (the right side) of the equator CO are inclined in the same direction but opposite to the inclination on the left side, as shown in Fig.1.

In Fig.1, the lateral grooves g1L, g2L and g3L on the left side of the tyre equator CO have left-side-upward inclinations, and the lateral grooves g1R, g2R and g3R on right side of the equator CO have right-side-upward inclinations. In other words, the axially outer ends of all the lateral grooves g1L, g1R, g2L, g2R, g3L and g3R are inclined in one circumferential direction D. Therefore, water drainage is effectively promoted and the wet grip performance is effectively improved.

The lateral grooves in each circumferential part or rib are arranged at regular pitches P in the circumferential direction of the tyre, and between the adjacent sets of the lateral grooves, the pitch arrangements are shifted.

The pitch arrangement of the middle lateral grooves (g2L, g2R) is shifted from the pitch arrangement of the central lateral grooves (g3L, g3R) in the above-mentioned circumferential direction D, and the shift LS2 is in the range of 0.3 times to 0.5 times the pitch P.

Similarly, the pitch arrangement of the shoulder lateral grooves (g1L, g1R) is shifted from the pitch arrangement of the middle lateral grooves (g2L, g2R) in the above-mentioned circumferential direction D, and this shift LS1 is in the range of 0.2 times to 0.3 times the pitch P.

Here, as shown in Fig.1, each shift (LS1 and LS2) is defined as the circumferential length measured in the above-mentioned circumferential direction D from a lateral groove end opened at the axially inner groove wall of the main groove to a lateral groove end opened at the axially outer groove wall of the same main groove, and from the rear edge to the rear edge of the groove ends (assuming that the advancing direction is the above-mentioned direction D).

By these circumferential shifts, the transmission of noise generated in one lateral groove to the adjacent lateral groove is blocked, and the resonance of the lateral groove is suppressed so that the noise level is be reduced.

If the shifts are smaller than the respective lower limits, the adjacent lateral grooves are substantially continued, and the transmission and resonance are increased, and as a result, the noise level is increased. If the shifts are larger than the respective upper limits, the drainage decreases, and wet grip performance is deteriorated.

Further, the pitch arrangement of the central lateral grooves g3L on the left side of the tyre equator and that of the central lateral grooves g3R on the right side of the tyre equator are shifted from each other. The shift LS3 measured circumferentially between the terminal end of the central lateral grooves g3L and the terminal end of the central lateral grooves g3R is in the range of 0.25 times to 0.5 times the above-mentioned pitch P.

Accompanying the shift of the central lateral grooves, the left half and the right half of the tread pattern are shifted from each other in the circumferential direction of the tyre, whereby synchronisation of noise from the left half and that from the right half can be avoided, and the overall low noise performance is further improved.

Further, each of the lateral grooves (g1L, g1R, g2L, g2R, g3L and g3R) is curved so that the further axially outer the position considered then the larger the inclination angle with respect to the tyre equator CO.

The angle (theta 1) formed between the axially inner end of the shoulder lateral groove (g1L, g1R) and the tyre equator CO is in the range of 65 to 80 degrees.

The angle (theta 2) formed between the axially inner end of the middle lateral groove (g2L, g2R) and the tyre equator CO is in the range of 45 to 60 degrees.

The angle (theta 3) formed between the axially inner end of the central lateral groove (g3L, g3R) and the tyre equator CO is in the range of 40 to 55 degrees.

The angle (theta 1) is larger than the angle (theta 2), and the angle (theta 2) is larger than the angle (theta 3).

When the angles (theta 1), (theta 2) and (theta 3) are smaller than the respective lower limits, the corner between the lateral groove and the main groove is decreased in rigidity and moved easily, which is liable to make noise, and wear and tear of rubber are liable to occur. When the angles (theta 1), (theta 2) and (theta 3) are larger than the respective upper limits, drainage is not improved.

Further, preferably, the groove width of the shoulder lateral grooves (g1L, g1R) is in the range of 0.25 to 0.55 times the width WG1 of the axially outermost main groove G1 with which the axially inner ends of the shoulder lateral groove (g1L, g1R) are connected, and the groove width of the middle lateral grooves (g2L, g2R) is in the range of 0.25 to 0.50 times the width WG2 of the inner main groove G2 with which the axially inner ends of the middle lateral groove (g2L, g2R) are connected.

In passenger car tyres, inclusive of this embodiment, the groove width of the shoulder lateral grooves (g1L, g1R) is in the range of 4.0 to 6.5 mm, and that of the middle lateral grooves (g2L, g2R) is in the range of 4.0 to 6.0 mm.

The width of the central lateral grooves (g3L, g3R) is larger than about 2 mm. As the inner ends of the central lateral grooves (g3L, g3R) are closed and water does not run therethrough, the groove width thereof can be smaller than the above-mentioned widths.

In this example, the shoulder lateral groove width is larger than the middle lateral groove width, and the middle lateral groove width is larger than the central lateral groove width, and each width is constant through the whole groove length. However, those widths can be the same.

Further, each width can gradually increase from the axially inner end to the outer end within the above-mentioned limitation to further promote axially outward drainage.

Further, the groove depths DH1 and DH2 of the main grooves G1 and G2, respectively are in the range of 0.06 times and 0.12 times the ground contact width W. In this embodiment, the groove depth DH1 is equal to the groove depth DH2.

The shoulder and middle lateral grooves g1L, g1R, g2L and g2R have the same groove depth as the main groove depths DH1 and DH2.

The depth of each of the central lateral grooves g3L and g3R decreases gradually decreased from the axially outer end to the inner end thereof.

The maximum depth at the outer end is equal to the depth DH2 of the inner main groove G2.

The minimum depth at the inner end is such that the difference from the maximum depth is 0.4 times to 0.6 times the groove depth DH2.

Therefore, the rigidity of the central rib RC is maintained and steering stability is improved without reducing drainage performance.

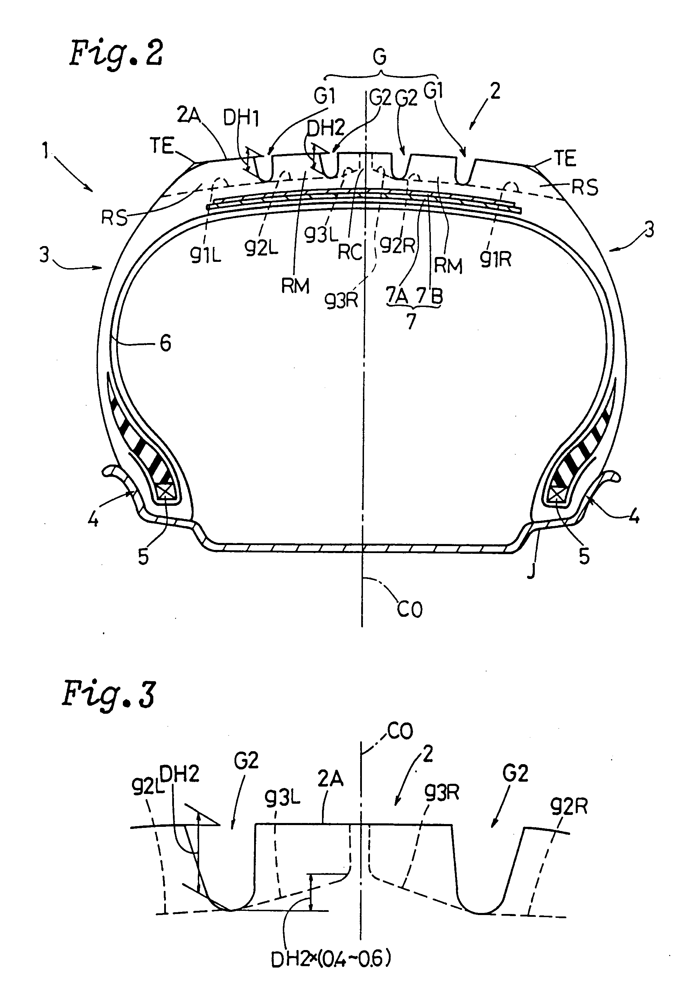

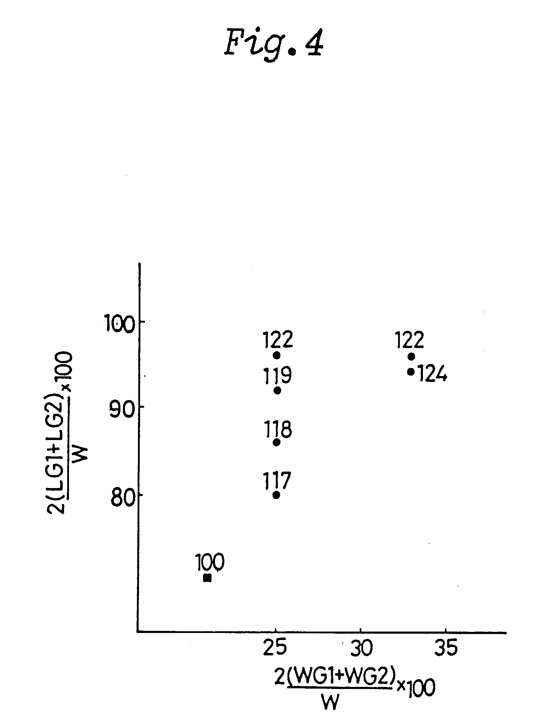

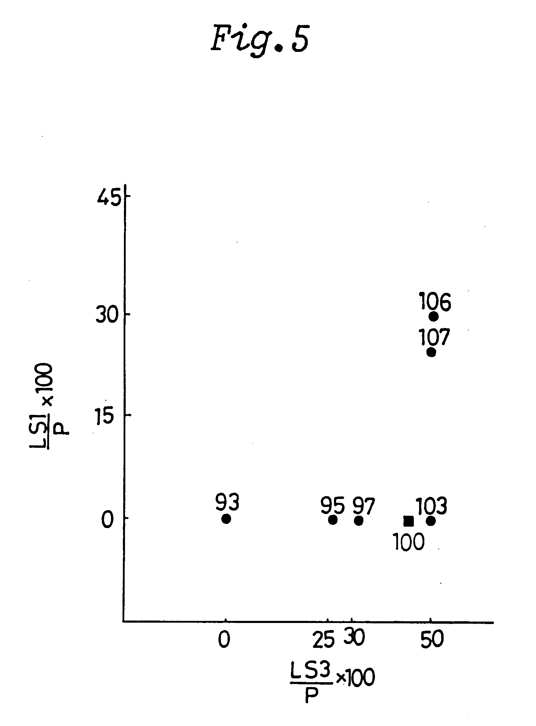

To show the effects of the invention, passenger car tyres of size 225/50R16 having the structure shown in Figs.1 and 2 were prepared and tested for wet grip and tyre noise. The test results are shown in Figs. 4 and 5.

In the test tyres, the main groove depth and the lateral groove depth respectively were constant, but the main groove width, the main groove position and the lateral groove shift were varied.

Wet Grip Test: Using a passenger car, the critical cornering speed was measured by increasing the running speed during turning at a constant radius in a wet cornering test course. The test results are indicated in Fig.4 by an index based on that the reference tyre is 100. The large the index, the higher the critical speed, and therefore, the better the wet grip performance.

Tyre Noise Test: Using a passenger car, the noise level was measured in the interior of the car. The test results are indicated in Fig.5 by an index based on that the reference tyre is 100. The larger the index, the smaller the noise, and therefore, the better the low noise performance.

In comparison with the reference tyre, the tyres of the present invention were improved in wet grip performance, as shown in Fig.4, without increasing tyre noise.

Further, as shown in Fig.5, by limiting the circumferential shifts (LS1, LS2, LS3) of the lateral grooves within the specific range, tyre noise was reduced.

**Claims**

1. A pneumatic radial tyre having a tread (2) provided with four main grooves (G1,G2) extending continuously in the circumferential direction of the tyre arranged symmetrically with respect to the tyre equator so as to divide the tread (2) into five ribs (RC,RM and RS), the four main grooves (G1,G2) consisting of a pair of axially inner main grooves (G2) disposed one on each side of the tyre equator (CO) and a pair of axially outermost main grooves (G1) disposed one between each tread edge (TE) and each inner main groove (G2) wherein each shoulder rib (RS) between the outermost main groove (G1) and the tread edge (TE) is provided with shoulder lateral grooves (g1L, g1R) extending from the outermost main grooves to the tread edge so as to divide the shoulder rib (RS) into blocks, each middle rib (RM) between the inner main groove (G2) and the outermost main groove (G1) is provided with middle lateral grooves (g2L, g2R) extending from the inner main groove (G2) to the outermost main groove (G1) so as to divide the middle rib (RM) into blocks, and the central rib (RC) between the two inner main grooves (G2) is provided with central lateral grooves (g3L, g3R) extending from the inner main grooves (G2) towards the tyre equator (CO) and terminated in the central rib (RC) so as to provide continuity in the circumferential direction (D) of the tyre, characterised in that in the state where the tyre is mounted on its regular rim and inflated to its regular inner pressure and loaded with its regular tyre load, the quotient (WG/W) of the total (WG) of the axial widths (WG1, WG2) of the four main grooves (G1 and G2) divided by the ground contact width (W) measured between the axial edges (SE) of the ground contacting area (S) being in the range of 0.25 to 0.32, and on each side of the tyre equator, the ground contact width (W) and the total (LG1 + LG2) of the axial length (LG1) measured from the ground contacting area edge (SE) to the axially inner edge of the shoulder rib (RS) and the axial length (LG2) measured from the ground contacting area edge (SE) to the axially inner edge of the middle rib (RM) satisfying the relation:

0.44 =< (LG1 + LG2)/W =< 0.50.

2. A pneumatic radial tyre according to claim 1, characterised in that said four main grooves (G1,G2) are straight, and the lateral grooves (g1L, g1R, g2L, g2R, g3L, g3R) are arranged or spaced apart at regular pitches (P) in the circumferential direction of the tyre, and all the lateral grooves on each side of the tyre equator are inclined in the same direction but in the opposite direction to the lateral grooves on the other side of the tyre equator.

3. A pneumatic radial tyre according to claim 2, characterised in that between both sides of each outermost main groove (G1), the shoulder lateral grooves (g1L, g1R) are shifted from the middle lateral grooves (g2L, g2R) in the a circumferential direction (D), and the shift (LS1) is 0.2 to 0.3 times the pitch P.

4. A pneumatic radial tyre according to claim 2 or 3, characterised in that between both sides of each inner main groove (G2), the middle lateral grooves (g2L, g2R) are shifted from the central lateral grooves (g3L, g3R) in the a circumferential direction (D), and the shift (LS2) is 0.3 to 0.5 times the pitch P.

5. A pneumatic radial tyre according to claim 2, 3 or 4 characterised in that the central lateral grooves (g3L) on one side of the tyre equator (CO) are shifted from the central lateral grooves (g3R) on the other side of the tyre equator in the a circumferential direction (D), and the shift (LS3) is 0.25 to 0.5 times the pitch P.

6. A pneumatic radial tyre according to any of claims 2 to 5, characterised in that the angle (theta 1) formed between the axially inner end of the shoulder lateral groove (g1L, g1R) and the tyre equator (CO) is in the range of 65 to 80 degrees, the angle (theta 2) formed between the axially inner end of the middle lateral groove (g2L, g2R) and the tyre equator (CO) is in the range of 45 to 60 degrees, the angle (theta 3) formed between the axially inner end of the central lateral groove (g3L, g3R) and the tyre equator (CO) is in the range of 40 to 55 degrees.

7. A pneumatic radial tyre according to claim 6, characterised in that the angle (theta 1) is larger than the angle (theta 2), and the angle (theta 2) is larger than the angle (theta 3).

8. A pneumatic radial tyre according to any of claims 2 to 7, characterised in that each of the lateral grooves (g1L, g1R, g2L, g2R, g3L and g3R) is curved so that the inclination thereof with respect to the tyre equator gradually increases from the axially inner end to the outer end thereof.

9. A pneumatic radial tyre according to any of claims 2 to 8, characterised in that each of the central lateral grooves (g3L, g3R) is gradually decreased in depth from the axially outer end to the inner end thereof so as to provide the maximum depth at the axially outer end and the minimum depth at the axially inner end, and the difference between the maximum depth and the minimum depth is 0.4 to 0.6 times the depth (DH2) of the inner main groove (G2).

10. A pneumatic radial tyre according to any of claims 1 to 9, characterised in that the groove width of the shoulder lateral grooves (g1L, g1R) is in the range of 0.25 to 0.55 times the width (WG1) of the outer main groove (G1), and the groove width of the middle lateral grooves (g2L, g2R) is in the range of 0.25 to 0.50 times the width (WG2) of the inner main groove (G2).

11. A pneumatic radial tyre according to claim 10, characterised in that the groove width of the shoulder lateral grooves (g1L, g1R) is larger than the groove width of the middle lateral grooves (g2L, g2R).

12. A pneumatic radial tyre according to claim 10, characterised in that each of the lateral grooves (g1L, g1R, g2L, g2R, g3L and g3R) has a constant groove width.

13. A pneumatic radial tyre according to claim 10, characterised in that each of the lateral grooves (g1L, g1R, g2L, g2R, g3L and g3R) has a groove width increasing gradually from the axially inner edge to the outer edge thereof.

**Patentansprüche**

1. Ein radialer Luftreifen mit einer Lauffläche (2), die mit vier Hauptrillen (G1, G2) versehen ist, die sich kontinuierlich in der Umfangsrichtung des Reifens erstrecken und symmetrisch zu dem Reifenäquator angeordnet sind, um die Lauffläche (2) in fünf Rippen (RC, RM und RS) zu unterteilen, wobei die vier Hauptrillen (G1, G2) aus einem Paar von axial inneren Hauptrillen (G2), von denen eine auf jeder Seite des Reifenäquators (CO) angeordnet ist, und einem Paar von axial weiter außen liegenden Hauptrillen (G1), von denen eine zwischen jeder Lauffächenkante (TE) und jeder inneren Hauptrille (G2) angeordnet ist, bestehen, wobei jede Schulterrippe (RS) zwischen der außen liegenden Hauptrille (G1) und der Laufflächenkante (TE) mit seitlich verlaufenden Schulterrillen (g1L, g1R) versehen ist, die sich von den äußeren Hauptrillen zu der Laufflächenkante erstrecken, um die Schulterrippe (RS) in Blöcke zu unterteilen, jede mittlere Rippe (RM) zwischen der inneren Hauptrille (G2) und der äußeren Hauptrille (G1) mit seitlich verlaufenden mittleren Rillen (g2L, g2R) versehen ist, die sich von der inneren Hauptrille (G2) zu der äußeren Hauptrille (G1) erstrecken, um die mittlere Rippe (RM) in Blöcke zu unterteilen, und die zentrale Rippe (RC) zwischen den beiden inneren Hauptrillen (G2) mit seitlich verlaufenden Zentralrillen (g3L, g3R) versehen ist, die sich von den inneren Hauptrillen (G2) zu dem Reifenäquator (CO) erstrecken und in der Zentralrippe (RC) enden, um die Durchgängigkeit des Reifens in der Umfangsrichtung (D) zu erhalten, dadurch **gekennzeichnet,** daß in dem Zustand, in dem der Reifen auf seiner regulären Felge montiert und auf seinen nominalen Innendruck aufgepumpt und mit seiner regulären Reifenbelastung belastet ist, der Quotient (WG/W) der Summe (WG) der axialen Breiten (WG1, WG2) der vier Hauptrillen (G1 und G2) geteilt durch die Bodenkontaktbreite (W) gemessen zwischen den axialen Kanten (SE) des Bodenkontaktbereichs (S) in dem Bereich von 0,25 bis 0,32 liegt und auf jeder Seite des Reifenäquators die Bodenkontaktbreite (W) und die Summe (LG1 + LG2) der axialen Länge (LG1) gemessen von der Bodenkontaktbereichskante (SE) zu der axial inneren Kante der Schulterrippe (RS) und der axialen Länge (LG2) gemessen von der Bodenkontaktbereichskante (SE) zu der axial inneren Kante der mittleren Rippe (RM) der Gleichung genügt:
0,44 = <(LG1 + LG2)/W = <0,50.

2. Ein radialer Luftreifen nach Anspruch 1, dadurch **gekennzeichnet,** daß die vier Hauptrillen (G1, G2) gerade verlaufen und daß die seitlich verlaufenden Rillen (g1L, g1R, g2L, g2R, g3L, g3R) in regelmäßigen Teilungen (B) in der Umfangsrichtung des Reifens angeordnet oder beabstandet sind, und daß alle seitlich verlaufenden Rillen auf jeder Seite des Reifenäquators in derselben Richtung aber in der entgegengesetzten Richtung zu den seitlichen Rillen auf der anderen Seite des Reifenäquators geneigt sind.

3. Ein radialer Luftreifen nach Anspruch 2, dadurch **gekennzeichnet,** daß zwischen beiden Seiten jeder außen liegenden Hauptrille (G1) die seitlich verlaufenden Schulterrillen (g1L, g1R) von den seitlich verlaufenden mittleren Rillen (g2L, g2R) in der Umfangsrichtung (D) verschoben sind und daß die Verschiebung (LS1) 0,2 bis 0,3 mal die Teilung (P) ist.

4. Ein radialer Luftreifen nach Anspruch 2 oder 3, dadurch **gekennzeichnet,** daß zwischen beiden Seiten jeder inneren Hauptrille (G2) die seitlich verlaufenden mittleren Rillen (g2L, g2R) von den seitlich verlaufenden Zentralrillen (g3L, g3R) in der Umfangsrichtung (D) verschoben sind, und daß die Verschiebung (LS2) 0,3 bis 0,5 mal die Teilung (P) ist.

5. Ein radialer Luftreifen nach Anspruch 2, 3 oder 4, dadurch **gekennzeichnet,** daß die seitlich verlaufenden Zentralrillen (g3L) auf einer Seite des Reifenäquators (CO) von den seitlich verlaufenden Zentralrillen (g3R) auf der anderen Seite des Reifenäquators in der Umfangsrichtung (D) verschoben sind, und daß die Verschiebung (LS3) 0,25 bis 0,5 mal die Teilung (P) ist.

6. Ein radialer Luftreifen nach einem der Ansprüche 2 bis 5, dadurch **gekennzeichnet,** daß der Winkel (Theta 1), der zwischen dem axial inneren Ende der seitlich verlaufenden Schulterrille (g1L, g1R) und dem Reifenäquator (CO) gebildet ist, in dem Bereich von 65 bis 80° liegt, der Winkel (Theta 2), der zwischen dem axial inneren Ende der mittleren seitlich verlaufenden Rille (g2L, g2R) und dem Reifenäquator (CO) gebildet ist, in dem Bereich von 45 bis 60° liegt, der Winkel (Theta 3), der zwischen dem axial inneren Ende der seitlich verlaufenden Zentralrille (g3L, g3R) und dem Reifenäquator (CO) gebildet ist, in dem Bereich von 40 bis 55° liegt.

7. Ein radialer Luftreifen nach Anspruch 6, dadurch **gekennzeichnet,** daß der Winkel (Theta 1) größer ist als der Winkel (Theta 2), und daß der Winkel (Theta 2) größer ist als der Winkel (Theta 3).

**8.** Ein radialer Luftreifen nach einem der Ansprüche 2 bis 7,
dadurch **gekennzeichnet,**
daß die seitlich verlaufenden Rillen (g1L, g1R, g2L, g2R, g3L, g3R) gekrümmt sind, so daß ihre Neigung gegenüber dem Reifenäquator kontinuierlich von dem axial inneren Ende zu dem äußeren Ende anwächst.

**9.** Ein radialer Luftreifen nach einem der Ansprüche 2 bis 8,
dadurch **gekennzeichnet,**
daß jede der seitlich verlaufenden Zentralrillen (g3L, g3R) allmählich in der Tiefe von ihrem axial äußeren Ende zu ihrem axial inneren Ende abnimmt, um eine maximale Tiefe an dem axial äußeren Ende und die minimale Tiefe an dem axial inneren Ende zu haben, und daß der Unterschied zwischen der maximalen Tiefe und der minimalen Tiefe 0,4 bis 0,6 mal der Tiefe (DH2) der inneren Hauptrille (G2) ist.

**10.** Ein radialer Luftreifen nach einem der Ansprüche 1 bis 9,
dadurch **gekennzeichnet,**
daß die Rillenbreite der seitlich verlaufenden Schulterrillen (g1L, g1R) in dem Bereich von 0,25 bis 0,5 mal der Breite (WG1) der äußeren Hauptrille (G1) liegt, und daß die Rillenbreite der mittleren seitlich verlaufenden Rillen (g2L, g2R) in dem Bereich von 0,25 bis 0,5 mal der Breite (WG2) der inneren Breite (WG2) der inneren Hauptrille (G2) liegt.

**11.** Ein radialer Luftreifen nach Anspruch 10,
dadurch **gekennzeichnet,**
daß die Rillenbreite der seitlich verlaufenden Schulterrillen (g1L, g1R) größer ist als die Rillenbreite der mittleren seitlich verlaufenden Rillen (g2L, g2R).

**12.** Ein radialer Luftreifen nach Anspruch 10,
dadurch **gekennzeichnet,**
daß jede der seitlich verlaufenden Rillen (g1L, g1R, g2L, g2R, g3L und g3R) eine konstante Rillenbreite besitzt.

**13.** Ein radialer Luftreifen nach Anspruch 10,
dadurch **gekennzeichnet,**
daß jede der seitlich verlaufenden Rillen (g1L, g1R, g2L, g2R, g3L und g3R) eine Rillenbreite hat, die allmählich von ihrer axial inneren Kante zu ihrer äußeren Kante anwächst.

**Revendications**

**1.** Pneumatique à carcasse radiale, comprenant une bande de roulement (2) ayant quatre gorges principales (G1, G2) disposées de façon continue dans la direction circonférentielle du pneumatique disposé symétriquement par rapport à l'équateur du pneumatique afin que la bande de roulement (2) soit divisée en cinq nervures (RC, RM et RS), les quatre gorges principales (G1, G2) comprenant une paire de gorges principales axialement internes (G2) disposées chacune d'un côté de l'équateur (CO) du pneumatique et deux gorges principales axialement externes (G1) disposées chacune entre un bord (TE) de la bande de roulement et une gorge principale interne (G2), dans lequel chaque nervure d'épaulement (RS) comprise entre la gorge principale externe (G1) et le bord (TE) de la bande de roulement a des gorges latérales d'épaulement (g1L, g1R) disposées des gorges principales externes vers le bord de la bande de roulement afin que la nervure d'épaulement (RS) soit divisée en blocs, chaque nervure médiane (RM) placée entre la gorge principale interne (G2) et la gorge principale externe (G1) comporte des gorges latérales médianes (g2L, g2R) disposées de la gorge principale interne (G2) à la gorge principale externe (G1) afin que la nervure médiane (RM) soit divisée en blocs, et la nervure centrale (RC) placée entre les deux gorges principales internes (G2) a des gorges latérales centrales (g3L, g3R) disposées des gorges principales internes (G2) vers l'équateur (CO) du pneumatique et se terminant dans la nervure centrale (RC) afin qu'elle assure la continuité dans la direction circonférentielle (D) du pneumatique, caractérisé en ce que, dans l'état dans lequel le pneumatique est monté sur sa jante normale, est gonflé à sa pression interne normale et est soumis à sa charge normale, le quotient (WG/W) de la somme (WG) des largeurs axiales (WG1, WG2) des quatre gorges principales (G1 et G2) et de la largeur (W) de contact avec le sol mesurée entre les bords axiaux (SE) de la région (S) de contact avec le sol est compris entre 0,25 et 0,32 et, de chaque côté de l'équateur du pneumatique, la largeur (W) de contact avec le sol et la somme (LG1 + LG2) de la longueur axiale (LG1) mesurée du bord (SE) de la région de contact avec le sol au bord axialement interne de la nervure d'épaulement (RS) et de la longueur axiale (LG2) mesurée du bord (SE) de la région de contact avec le sol au bord axialement interne de la nervure médiane (RM) correspondent à la relation :

$$0,44 \leq (LG1 + LG2)/W \leq 0,50$$

2. Pneumatique à carcasse radiale selon la revendication 1, caractérisé en ce que les quatre gorges principales (G1, G2) sont rectilignes, et les gorges latérales (g1L, g1R, g2L, g2R, g3L, g3R) sont disposées ou espacées avec des pas réguliers (P) dans la direction circonférentielle du pneumatique, et toutes les gorges latérales de chaque côté de l'équateur du pneumatique sont inclinées dans la même direction mais en sens opposé à celui des gorges latérales de l'autre côté de l'équateur du pneumatique.

3. Pneumatique à carcasse radiale selon la revendication 2, caractérisé en ce que, entre les deux côtés de chaque gorge principale externe (G1), les gorges latérales d'épaulement (g1L, g1R) sont décalées par rapport aux gorges latérales médianes (g2L, g2R) dans la direction circonférentielle (D), et le décalage (LS1) est compris entre 0,2 et 0,3 fois le pas P.

4. Pneumatique à carcasse radiale selon la revendication 2 ou 3, caractérisé en ce que, entre les deux côtés de chaque gorge principale interne (G2), les gorges latérales médianes (g2L, g2R) sont décalées par rapport aux gorges latérales centrales (g3L, g3R) dans la direction circonférentielle (D), et le décalage (LS2) est compris entre 0,3 et 0,5 fois le pas P.

5. Pneumatique à carcasse radiale selon la revendication 2, 3 ou 4, caractérisé en ce que les gorges latérales centrales (g3L) d'un premier côté de l'équateur du pneumatique (CO) sont décalées par rapport aux gorges latérales centrales (g3R) de l'autre côté de l'équateur du pneumatique dans la direction circonférentielle (D), et le décalage (LS3) est compris entre 0,25 et 0,5 fois le pas P.

6. Pneumatique à carcasse radiale selon l'une des revendications 2 à 5, caractérisé en ce que l'angle ($\theta$1) formé entre l'extrémité axialement interne de la gorge latérale d'épaulement (g1L, g1R) et l'équateur (CO) du pneumatique est compris entre 65 et 80°. L'angle ($\theta$2) formé entre l'extrémité axialement interne de la gorge latérale médiane (g2L, g2R) et l'équateur du pneumatique (CO) est compris entre 45 et 60°, et l'angle ($\theta$3) formé entre l'extrémité axialement interne de la gorge latérale centrale (g3L, g3R) et l'équateur (CO) du pneumatique est compris entre 40 et 55°.

7. Pneumatique à carcasse radiale selon la revendication 6, caractérisé en ce que l'angle ($\theta$1) est supérieur à l'angle ($\theta$2), et l'angle ($\theta$2) est supérieur à l'angle ($\theta$3).

8. Pneumatique à carcasse radiale selon l'une des revendications 2 à 7, caractérisé en ce que chacune des gorges latérales (g1L, g1R, g2L, g2R, g3L et g3R) est courbée afin que son inclinaison par rapport à l'équateur du pneumatique augmente progressivement de l'extrémité axialement interne à l'extrémité externe.

9. Pneumatique à carcasse radiale selon l'une des revendications 2 à 8, caractérisé en ce que chacune des gorges latérales centrales (g3L, g3R) a une profondeur qui diminue progressivement de l'extrémité axialement externe vers l'extrémité interne afin que la profondeur maximale se trouve à l'extrémité axialement externe et la profondeur minimale à l'extrémité axialement interne, et la différence entre la profondeur maximale et la profondeur minimale est comprise entre 0,4 et 0,6 fois la profondeur (DH2) de la gorge principale interne (G2).

10. Pneumatique à carcasse radiale selon l'une des revendications 1 à 9, caractérisé en ce que la largeur des gorges latérales d'épaulement (g1L, g1R) est comprise entre 0,25 et 0,55 fois la largeur (WG1) de la gorge principale externe (G1), et la largeur des gorges latérales médianes (g2L, g2R) est comprise entre 0,25 et 0,50 fois la largeur (WG2) de la gorge principale interne (G2).

11. Pneumatique à carcasse radiale selon la revendication 10, caractérisé en ce que la largeur des gorges latérales d'épaulement (g1L, g1R) est supérieure à la largeur des gorges latérales médianes (g2L, g2R).

12. Pneumatique à carcasse radiale selon la revendication 10, caractérisé en ce que chaque gorge latérale (g1L, g1R, g2L, g2R, g3L et g3R) a une largeur constante.

13. Pneumatique à carcasse radiale selon la revendication 10, caractérisé en ce que chacune des gorges latérales (g1L, g1R, g2L, g2R, g3L et g3R) a une largeur qui augmente progressivement du bord axialement interne au bord externe.

# Fig.1

*Fig.2*

*Fig.3*

DH2×(0.4~0.6)

11

*Fig.4*

# Fig.5